# EUROPÄISCHE PATENTSCHRIFT

(11) **EP 2 099 836 B1**
(45) Veröffentlichungstag und Bekanntmachung des Hinweises auf die Patenterteilung: **17.08.2011**
(21) Anmeldenummer: 07857311.0
(22) Anmeldetag: 10.12.2007
(51) Int. Cl.: C08F 20/06, C08F 2/22, C08F 2/18

(54) **VERFAHREN ZUR VISKOSITÄTSERNIEDRIGUNG VON WÄSSRIGEN POLYMERISATDISPERSIONEN WASSERLÖSLICHER POLYMERISATE**
METHOD OF REDUCING THE VISCOSITY OF AQUEOUS POLYMER DISPERSIONS OF WATER-SOLUBLE POLYMERS
PROCÉDÉ DE RÉDUCTION DE LA VISCOSITÉ DE DISPERSIONS POLYMÈRES AQUEUSES DE POLYMÈRES SOLUBLES DANS L'EAU

(30) Priorität: 11.12.2006 EP 06125825
(43) Veröffentlichungstag der Anmeldung: 16.09.2009
(73) Patentinhaber: BASF SE, 67056 Ludwigshafen (DE)
(72) Erfinder: KRÜGER, Christian, 67346 Speyer (DE); RENONCOURT, Audrey, 67059 Ludwigshafen (DE); BÖLTER, Henning, 67319 Wattenheim (DE); MOSSBACH, Ralf, 67473 Lindenberg (DE); HAAS, Klaus, 67067 Ludwigshafen (DE); WEBER, Manfred, 68199 Mannheim (DE)
(86) Internationale Anmeldenummer: PCT/EP2007/063579
(87) Internationale Veröffentlichungsnummer: WO 2008/071648

(56) Entgegenhaltungen:
- WO-A-2004/078841
- WO-A-2005/012378
- DE-A1-102004 063 004
- US-A- 6 093 764
- US-A1- 2005 119 419

## Beschreibung

Gegenstand der vorliegenden Erfindung ist ein Verfahren zur Viskositätserniedrigung einer wässrigen Polymerisatdispersion eines wasserlöslichen Polymerisats, welches dadurch gekennzeichnet ist, dass der wässrigen Polymerisatdispersion des wasserlöslichen Polymerisats wenigstens
a) ein Homopolymerisat aus Acrylsäure mit einem gewichtsmittleren Molekulargewicht Mw ≤ 20000 g/mol [Polymerisat A] und/oder
b) ein Copolymerisat aus Acrylsäure und Maleinsäureanhydrid mit einem gewichtsmittleren Molekulargewicht Mw ≤ 20000 g/mol [Polymerisat B],
in einer Menge von 0,1 bis 20 Gew.-%, bezogen auf die wässrige Polymerisatdispersion, zugesetzt wird.

Wässrige Polymerisatlösungen werden häufig hergestellt, indem entsprechende ethylenisch ungesättigte Monomere in wässrigem Medium radikalisch polymerisiert werden. Problematisch an diesen wässrigen Polymerlösungen ist jedoch, dass sie schon bei niedrigen Polymerisatfeststoffgehalten hohe Viskositätswerte aufweisen. In der Weiterverarbeitung der wässrigen Polymerisatlösungen würden diese deshalb entweder einen unerwünscht niedrigen Polymerisatfeststoffgehalt oder eine unerwünscht hohe Viskosität aufweisen. Durch Zusatz spezieller anorganischer oder organischer Verbindungen, insbesondere Salze, vor, während oder nach der Polymerisation, wird die Löslichkeit der gelösten Polymerisate im wässrigen Medium soweit herabgesetzt, dass die wasserlöslichen Polymerisate als heterogene Phase im wässrigen Medium (= wässrige Polymerisatdispersionen wasserlöslicher Polymerisate) vorliegen. Werden diese anorganischen oder organischen Verbindungen dem wässrigen Medium vor und/oder während der Polymerisation zugegeben, so lassen sich wässrige Polymerisatdispersionen wasserlöslicher Polymerisate herstellen, die - bei gleicher oder geringerer Viskosität - im Vergleich zu den entsprechenden wässrigen Polymerisatlösungen, deutlich höhere Polymerisatfeststoffgehalte aufweisen.

Wässrige Polymerisatdispersionen wasserlöslicher Polymerisate und deren Herstellung unter Verwendung spezieller anorganischer oder organischer Verbindungen sind dem Fachmann bekannt (siehe beispielsweise DE-A 10041394, DE-A 10110831, FR-A 2815635, FR-A 2816833, US-A 4,380,600, US-A 4,883,536, US-A 5,605,970, EP-A 183466, EP-A 984990, WO 97/34933, WO 01/17914, WO 03/46024, WO 05/12378, WO 05/100415 oder WO 05/100416).

Allerdings weisen wässrige Polymerisatdispersionen wasserlöslicher Polymerisate nach deren Herstellung unter Verwendung spezieller anorganischer oder organischer Verbindungen häufig noch Viskositätswerte auf, welche sich auch durch zusätzliche Mengen der zur Herstellung verwendeten anorganischen oder organischen Verbindungen nicht oder nur unwesentlich weiter erniedrigen lassen.

Es bestand daher die Aufgabe, Verbindungen bereitzustellen, durch welche sich die Viskositätswerte von wässrigen Polymerisatdispersionen wasserlöslicher Polymerisate weiter erniedrigen lassen.

Überraschender Weise wurde die Aufgabe durch das eingangs definierte Verfahren gelöst.

Als Polymerisate A kommen alle Homopolymerisate aus Acrylsäure mit einem gewichtsmittleren Molekulargewicht Mw ≤ 20000 g/mol in Betracht. Unter Homopolymerisate von Acrylsäure werden alle oligomeren oder polymeren Verbindungen verstanden, welche aus wenigstens fünf Acrylsäureeinheiten aufgebaut sind und daher ein Molekulargewicht ≥ 360 g/mol aufweisen. Bevorzugt weisen die Polymerisate A ein gewichtsmittleres Molekulargewicht ≥ 500 g/mol und ≤ 15000 g/mol und insbesondere bevorzeugt ≥ 1000 g/mol und ≤ 10000 g/mol bzw. ≥ 000 g/mol und ≤ 5000 g/mol auf.

Die Herstellung der Polymerisate A ist dem Fachmann geläufig und erfolgt beispielsweise durch radikalische Polymerisation von Acrylsäure unter Verwendung von Radikalkettenreglern in einem polaren Lösungsmittel, wie beispielsweise Alkoholen, wie Methanol, Ethanol oder Isopropanol, Ketonen, wie Aceton oder Methylethylketon, cyclischen Ethern, wie Tetrahydrofuran, Sulfoxiden, wie Dimethylsulfoxid, Formamiden, wie Dimethylfomamid sowie insbesondere in Wasser (siehe beispielsweise Ullmann Encyclopedia, Wiley VCH, 6th Edition, 2000, Electronic Release, Kapitel "Polyacrylates"). Selbstverständlich können auch Gemische von polaren Lösungsmitteln verwendet werden.

Selbstverständlich umfassen die Polymerisate A im Rahmen dieser Schrift auch die mit üblichen Basen, wie Alkali- oder Erdalkalihydroxide, Ammoniumhydroxid sowie organischen Aminoverbindungen, neutralisierten oder teilneutralisierten Acrylsäurehomopolymerisate.

Als Polymerisate B kommen alle Copolymerisate aus Acrylsäure und Maleinsäureanhydrid mit einem gewichtsmittleren Molekulargewicht Mw ≤ 20000 g/mol in Betracht. Unter Copolymerisaten von Acrylsäure und Maleinsäureanhydrid werden alle oligomeren oder polymeren Verbindungen verstanden, welche aus wenigstens zwei Acrylsäure- und wenigstens zwei Maleinsäureanhydrideinheiten aufgebaut sind und daher ein Molekulargewicht ≥ 340 g/mol aufweisen. Bevorzugt weisen die Polymerisate B ein gewichtsmittleres Molekulargewicht ≥ 500 g/mol und ≤ 15000 g/mol und insbesondere bevorzugt ≥ 1000 g/mol und ≤ 10000 g/mol bzw. ≥ 1000 g/mol und ≤ 5000 g/mol auf.

Die Herstellung der Polymerisate B ist dem Fachmann geläufig und erfolgt beispielsweise durch radikalische Polymerisation von Acrylsäure und Maleinsäureanhydrid unter Verwendung von Radikalkettenreglern in einem polaren Lösungsmittel, wie beispielsweise Alkoholen, wie Methanol, Ethanol oder Isopropanol, Ketonen, wie Aceton oder Methylethylketon, cyclischen Ethern, wie Tetrahydrofuran, Sulfoxiden, wie Dimethylsulfoxid, Formamiden, wie Dimethylfomamid sowie insbesondere in Wasser (siehe beispielsweise DE-A 3138574, DE-A 3147489, B.C. Trivedi, B.M. Culbertson, Maleic Anhydride, Chapter 9, 9.2.5 Acrylic Acid, Plenum Press 1982, New York). Selbstverständlich können auch Gemische von polaren Lösungsmitteln verwendet werden.

Selbstverständlich umfassen die Polymerisate B im Rahmen dieser Schrift auch die durch Reaktion der Anhydridgruppen mit Wasser gebildeten Maleinsäurederivate sowie die mit üblichen Basen, wie Alkali- oder Erdalkalihydroxide, Ammoniumhydroxid sowie organischen Aminoverbindungen, neutralisierten oder teilneutralisierten Acrylsäure/Maleinsäure-Copolymerisate.

Vorteilhaft ist das Polymerisat B aufgebaut ist aus Acrylsäure und Maleinsäureanhydrid im Mengenverhältnis von 9:1 bis 1:9, bevorzugt 5:1 bis 1:5 und insbesondere bevorzugt 3:1 bis 1:3.

Die gewichtsmittleren Molekulargewichte der Polymerisate A und B werden in einer dem Fachmann geläufigen Art und Weise in Anlehnung an DIN 55672-1 gelpermeationschromatographisch (beispielsweise bei 35 °C an Suprema-Trennsäulen mit auf pH 7 gepuffertem entionisierten Wasser als Elutionsmittel) bestimmt.

Zur Viskositätserniedrigung einer wässrigen Polymerisatdispersion eines wasserlöslichen Polymerisats, werden dieser 0,1 bis 20 Gew.-%, häufig 1 bis 15 Gew.-% und oft 2 bis 10 Gew.-%, jeweils bezogen auf die wässrige Polymerisatdispersion des wasserlöslichen Polymerisats, wenigstens eines der vorgenannten Polymeriate A und/oder B zugegeben. Dabei ist die Art und die Menge der zuzusetzenden Polymerisate A und/oder B zur Viskositätserniedrigung stark abhängig von der wässrigen Polymerisatdispersion des wasserlöslichen Polymerisats, insbesondere von Art und Menge des wasserlöslichen Polymerisats, Art und Menge der zur Ausbildung der heterogenen Phase eingesetzten anorganischen oder organischen Verbindungen sowie dem Ausmaß angestrebten Viskositätserniedrigung. Falls erforderlich, kann der Fachmann durch wenige routinemäßige Versuche die geeignete Art und Menge des wenigstens einen Polymerisats A und B ermitteln. Selbstverständlich können zur Viskositätserniedrigung einzelne Polymerisate A oder B oder aber auch Gemische hiervon eingesetzt werden.

Besonders vorteilhaft eignet sich das vorliegende erfindungsgemäße Verfahren zur Viskositätserniedrigung einer wässrigen Polymerisatdispersion eines wasserlöslichen Polymerisats, welche hergestellt wurde durch radikalisch induzierte Polymerisation wenigstens eines ethylenisch ungesättigten Monomeren MON in Gegenwart von wenigstens einem wasserlöslichen Polymeren X und wenigstens einem wasserlöslichen Polymeren Y, wobei das wenigstens eine wasserlösliche Polymer X ausgewählt ist aus
(a1) Pfropfpolymerisaten von Vinylacetat und/oder Vinylpropionat auf Polyalkylenglykol oder ein- oder beidseitig mit Alkyl-, Carboxyl- oder Aminogruppen substituiertem Polyalkylenglykol,
(a2) Copolymerisaten aus Alkylpolyalkylenglykol(meth)acrylaten und (Meth)acrylsäure,
(a3) Polyalkylenglykolen,
(a4) ein- oder beidseitig mit Alkyl-, Carboxyl- oder Aminogruppen substituierten Polyalkylenglykolen,
und das wenigstens eine wasserlösliche Polymer Y gewählt ist aus
(b1) hydrolysierten Copolymerisaten aus Vinylalkylethern und Maleinsäureanhydrid als freie Polysäure oder zumindest partiell mit Alkalimetallhydroxiden oder Ammoniumbasen neutralisiert,
(b2) Stärke, modifiziert oder unmodifiziert,
(b3) synthetischen Copolymerisaten, erhältlich durch Copolymerisation von
(β1) einem oder mehreren nichtionischen monoethylenisch ungesättigten Monomeren,
(β2) einem oder mehreren kationischen monoethylenisch ungesättigten Monomeren,
(β3) optional einem oder mehreren anionischen monoethylenisch ungesättigten Monomeren,
wobei der molare Anteil an in (b3) einpolymerisierten kationischen monoethylenisch ungesättigten Monomeren (β2) höher ist als der Anteil an einpolymerisierten anionischen monoethylenisch ungesättigten Monomeren (β3).

Entsprechende Polymerisatsysteme sind in der DE-A 102004063004, insbesondere in den Abschnitten [0038] bis [0152], offenbart, auf welche im Rahmen dieser Patentanmeldung ausdrücklich Bezug genommen werden soll.

Die Zugabe der viskositätserniedrigenden Polymerisate A und/oder B zu den wässrigen Polymerisatdispersionen wasserlöslicher Polymerisate erfolgt in der Regel im Temperaturbereich ≥ 0 °C und ≤ 100 °C, bevorzugt ≥ 10 °C und ≤ 80 °C und insbesondere bevorzugt ≥ 20 °C und ≤ 70 °C bei Atmosphärendruck (1 atm = 1,013 bar absolut) unter Inertgas- oder Luftatmosphäre. Selbstverständlich kann die Zugabe der Polymerisate A und/oder B auch bei höheren Drücken erfolgen. Vorteilhaft erfolgt die Zugabe der Polymerisate A und/oder B unter Mischen, insbesondere unter Rühren der wässrigen Polymerisatdispersionen, wobei der Mischvorgang solange durchgeführt wird, bis die Polymerisate A und/oder B homogen in den wässrigen Polymerisatdispersionen verteilt sind.

Die durch Zugabe der viskositätserniedrigenden Polymerisate A und/oder B zu den wässrigen Polymerisatdispersionen wasserlöslicher Polymerisate erzielten Viskositäten liegen - bei gleicher Messtemperatur - in der Regel um ≥ 200 mPas, häufig ≥ 500 mPas und oft sogar ≥ 1000 mPas unter den Viskositätswerten der nicht additivierten wässrigen Polymerisatdispersionen, denen keine zusätzlichen Polymerisate A und/oder B zugemischt wurden. Die Bestimmung der Viskositäten wässriger Polymerisatdispersionen ist dem Fachmann geläufig und erfolgt insbesondere nach der Brookfield-Messmethode (DIN EN ISO 2555).

Die erfindungsgemäß erhaltenen niedrigviskosen wässrigen Polymerisatdispersionen wasserlöslicher Polymerisate lassen sich insbesondere vorteilhaft als Komponente bei der Herstellung von Klebstoffen, Dichtmassen, Kunststoffputzen, Papierstreichmassen, Faservliesen, Anstrichmitteln, Pharma- bzw. Kosmetikprodukten und Beschichtungsmitteln für organische oder anorganische Substrate sowie zur Modifizierung von mineralischen Bindemitteln oder Kunststoffen einsetzen.

Nachfolgende nicht einschränkende Beispiele sollen die Erfindung erläutern.

Herstellung einer wässrigen Polymerisatdispersion eines wasserlöslichen Polymerisates

In einem 2L-HWS Gefäß, ausgerüstet mit einem Anker-Rührer und zwei Dosiereinrichtungen wurden bei 20 bis 25 °C (Raumtemperatur) und unter Stickstoffatmosphäre 401 g entionisiertes Wasser, 453 g einer wässrigen Lösung eines Vinylacetat/Polyethylenglykol-Pfropfpolymerisates (Mengenverhältnis Vinylacetat/Polyethylenglykol: 60/40; Feststoffgehalt 18,7 Gew.-%; Sokalan^{®} HP 22G der BASF AG), 214 g einer wässrigen Lösung eines Maleinsäureanhydrid/Vinylmethylether-Copolymerisats (Mengenverhältnis Maleinsäureanhydrid/Vinylmethylether: 62,8/37,2; Feststoffgehalt 35,3 Gew.-%; Lupasol^{®} MS der BASF AG), vorgelegt. Zu dieser Lösung wurden unter Rühren 50 g Acrylsäure und 0,011 g 2,2'-Azobis(2-amidinopropan)dihydrochlorid (Wako V 50 von der Firma Wako) gelöst in 2,33 g entionisiertem Wasser zugegeben und die erhaltene Reaktionsmischung in 20 Minuten auf 64 °C aufgeheizt. Nach Erreichen der Temperatur wurden zeitgleich beginnend der Monomerzulauf, bestehend aus 75 g Acrylsäure und 0,63 g Trimethylolpropanethoxilattriacrylat (Sartomer^{®} SR 9035 der Firma Sartomer) innerhalb von 3,5 Stunden und der Initiatorzulauf, bestehend aus 0,09 g Wako V 50 und 20 g entionisiertem Wasser innerhalb von 4 Stunden kontinuierlich zudosiert. Nach Dosierende des Initiatorzulaufs ließ man die Polymerisationsmischung noch 30 Minuten bei 64 °C nachrühren und gab dann weitere 0,16 g Wako V 50, gelöst in 33,5 g entionisiertem Wasser zu. Anschließend ließ man die erhaltene wässrige Polymerisatdispersion noch 2 Stunden bei 64 °C nachreagieren. Danach wurde die wässrige Polymerisatdispersion auf Raumtemperatur abgekühlt und die Viskosität der erhaltenen wässrigen Polymerisatdispersion zu 2250 mPas bestimmt.

Die Bestimmung der Viskositäten der wässrigen Polymerisatdispersionen erfolgte generell gemäß DIN EN ISO 2555 mit einem Brookfield-Viskosimeter "Brookfield RVT", Spindel 3, 20 Umdrehungen pro Minute; Temperatur: 23 °C; Konzentration des Polymerisats (Feststoffgehalt) wie in Beispielen angegeben.

### Ermittlung der Viskositäten nach Zugabe der erfindungsgemäßen Polymerisaten

Die Ermittlung der Viskositätswerte erfolgte generell dergestalt, dass 125 g der vorbeschriebenen wässrigen Polymerisatdispersion bei Raumtemperatur mit 12,5 g einer 24 gew.-%igen wässrigen Lösung eines Polymerisats A bzw. eines Polymerisats B (bezogen auf Polymerisatfeststoff) homogen gemischt und danach die Viskosität der erhaltenen wässrigen Polymerisatdispersion bestimmt wurde. Als Polymerisat A (Beispiel 1) wurde eine Polyacrylsäure mit einem gewichtsmittleren Molekulargewicht von 4000 g/mol [Sokalan^{®} CP 10 der BASF AG] und als Polymerisat B (Beispiel 2) ein Copolymerisat aus Acrylsäure und Maleinsäureanhydrid im Gewichtsverhältnis 42,3/57,7 mit einem gewichtsmittleren Molekulargewicht von 3000 g/mol [Sokalan^{®} CP 12S der BASF AG] verwendet. Die erhaltenen Ergebnisse sind in Tabelle 1 aufgelistet. Zur Bestimmung der Basisviskosität wurden 125 g der vorbeschriebenen wässrigen Polymerisatdispersion mit 12,5 g entionisiertem Wasser homogen gemischt (Basiswert).

Zum Vergleich wurden 453 g einer wässrigen Lösung eines Vinylacetat/Polyethylenglykol-Pfropfpolymerisates (Mengenverhältnis Vinylacetat/Polyethylenglykol: 60/40; Feststoffgehalt 18,7 Gew.-%, Sokalan^{®} HP 22G) und 214 g einer wässrigen Lösung eines Maleinsäureanhydrid/Vinylmethylether-Copolymerisats (Mengenverhältnis Maleinsäureanhydrid/Vinylmethylether: 62,8/37,2; Feststoffgehalt 35,3 Gew.-%, Lupasol^{®} MS) in einem Rührkolben homogen gemischt. Der Feststoffgehalt der erhaltenen Polymerlösung errechnete sich zu 24 Gew.-%. Von der erhaltenen Polymerlösung wurden ebenfalls 12,5 g eingesetzt. Das erhaltene Ergebnis ist ebenfalls in Tabelle 1 aufgelistet (Vergleichsbeispiel).

**Tabelle 1: Viskositätswerte**

| Beispiel | Viskosität [mPas] |
|---|---|
| Basiswert | 2320 |
| 1 | 530 |
| 2 | 650 |
| Vergleich | 1980 |

## Patentansprüche

1. Verfahren zur Viskositätserniedrigung einer wässrigen Polymerisatdispersion eines wasserlöslichen Polymerisats, **dadurch gekennzeichnet, dass** der wässrigen Polymerisatdispersion des wasserlöslichen Polymerisats wenigstens
a) ein Homopolymerisat aus Acrylsäure mit einem gewichtsmittleren Molekulargewicht Mw ≤ 20000 g/mol [Polymerisat A] und/oder
b) ein Copolymerisat aus Acrylsäure und Maleinsäureanhydrid mit einem gewichtsmittleren Molekulargewicht Mw ≤ 20000 g/mol [Polymerisat B],
in einer Menge von 0,1 bis 20 Gew.-%, bezogen auf die wässrige Polymerisatdispersion, zugesetzt wird.

2. Verfahren nach Anspruch 1, **dadurch gekennzeichnet, dass** Polymerisat A ein gewichtsmittleres Molekulargewicht Mw ≥ 1000 und ≤ 10000 g/mol aufweist.

3. Verfahren nach Anspruch 1 oder 2, **dadurch gekennzeichnet, dass** Polymerisat B ein gewichtsmittleres Molekulargewicht Mw ≥ 1000 und ≤ 10000 g/mol aufweist.

4. Verfahren nach einem der Ansprüche 1 bis 3, **dadurch gekennzeichnet, dass** Polymerisat B aufgebaut ist aus Acrylsäure und Maleinsäureanhydrid im Mengenverhältnis von 9:1 bis 1:9.

5. Verfahren nach einem der Ansprüche 1 bis 4, **dadurch gekennzeichnet, dass** die wässrige Polymerisatdispersion eines wasserlöslichen Polymerisats hergestellt wurde durch radikalisch induzierte Polymerisation wenigstens eines ethylenisch ungesättigten Monomeren MON in Gegenwart von wenigstens einem wasserlöslichen Polymeren X und wenigstens einem wasserlöslichen Polymeren Y, wobei das wenigstens eine wasserlösliche Polymer X ausgewählt ist aus
(a1) Pfropfpolymerisaten von Vinylacetat und/oder Vinylpropionat auf Polyalkylenglykol oder ein- oder beidseitig mit Alkyl-, Carboxyl- oder Aminogruppen substituiertem Polyalkylenglykol,
(a2) Copolymerisaten aus Alkylpolyalkylenglykol(meth)acrylaten und (Meth)acrylsäure,
(a3) Polyalkylenglykolen,
(a4) ein- oder beidseitig mit Alkyl-, Carboxyl- oder Aminogruppen substituierten Polyalkylenglykolen,
und das wenigstens eine wasserlösliche Polymer Y gewählt ist aus
(b1) hydrolysierten Copolymerisaten aus Vinylalkylethern und Maleinsäureanhydrid als freie Polysäure oder zumindest partiell mit Alkalimetallhydroxiden oder Ammoniumbasen neutralisiert,
(b2) Stärke, modifiziert oder unmodifiziert,
(b3) synthetischen Copolymerisaten, erhältlich durch Copolymerisation von
(β1) einem oder mehreren nichtionischen monoethylenisch ungesättigten Monomeren,
(β2) einem oder mehreren kationischen monoethylenisch ungesättigten Monomeren,
(β3) optional einem oder mehreren anionischen monoethylenisch ungesättigten Monomeren,
wobei der molare Anteil an in (b3) einpolymerisierten kationischen monoethylenisch ungesättigten Monomeren (β2) höher ist als der Anteil an einpolymerisierten anionischen monoethylenisch ungesättigten Monomeren (β3).

## Claims

1. A method of viscosity lowering of an aqueous dispersion of a water-soluble addition polymer, which comprises adding to said aqueous dispersion of said water-soluble addition polymer at least
a) one addition homopolymer of acrylic acid having a weight-average molecular weight Mw ≤ 20 000 g/mol [polymer A] and/or
b) one addition copolymer of acrylic acid and maleic anhydride having a weight-average molecular weight Mw ≤ 20 000 g/mol [polymer B]
in an amount of 0.1% to 20% by weight, based on the aqueous polymer dispersion.

2. The method according to claim 1, wherein polymer A has a weight-average molecular weight Mw ≥ 1000 and ≤ 10 000 g/mol.

3. The method according to claim 1 or 2, wherein polymer B has a weight-average molecular weight Mw ≥ 1000 and ≤ 10 000 g/mol.

4. The method according to any one of claims 1 to 3, wherein polymer B is synthesized from acrylic acid and maleic anhydride in a quantitative ratio of 9:1 to 1:9.

5. The method according to any one of claims 1 to 4, wherein the aqueous dispersion of a water-soluble addition polymer has been prepared by freeradically induced addition polymerization of at least one ethylenically unsaturated monomer MON in the presence of at least one water-soluble polymer X and at least one water-soluble polymer Y, the at least one water-soluble polymer X being selected from
(a1) addition graft polymers of vinyl acetate and/or vinyl propionate on polyalkylene glycol or on polyalkylene glycol substituted at one or both ends by alkyl, carboxyl or amino groups,
(a2) addition copolymers of alkylpolyalkylene glycol (meth) acrylates and (meth) acrylic acid,
(a3) polyalkylene glycols,
(a4) polyalkylene glycols substituted at one or both ends by alkyl, carboxyl or amino groups,
and the at least one water-soluble polymer Y being selected from
(b1) hydrolyzed addition copolymers of vinyl alkyl ethers and maleic anhydride as free polyacid or at least partially neutralized with alkali metal hydroxides or ammonium bases,
(b2) starch, modified or unmodified,
(b3) synthetic addition copolymers obtainable by copolymerizing
(β1) one or more nonionic monoethylenically unsaturated monomers,
(β2) one or more cationic monoethylenically unsaturated monomers,
(β3) optionally one or more anionic monoethylenically unsaturated monomers,
the molar fraction of cationic monoethylenically unsaturated monomers (β2) copolymerized in (b3) being higher than the fraction of copolymerized anionic monoethylenically unsaturated monomers (β3).

## Revendications

1. Procédé pour la diminution de la viscosité d'une dispersion aqueuse d'un produit polymérisé soluble dans l'eau, **caractérisé en ce que** la dispersion aqueuse d'un produit polymérisé soluble dans l'eau est additionnée d'au moins
a) un homopolymère d'acide acrylique présentant un poids moléculaire pondéral moyen Mw ≤ 20 000 g/mole [polymère A] et/ou
b) un copolymère d'acide acrylique et d'anhydride d'acide maléique présentant un poids moléculaire pondéral moyen Mw ≤ 20 000 g/mole [polymère B],
en une quantité de 0,1 à 20% en poids, par rapport à la dispersion aqueuse de polymère.

2. Procédé selon la revendication 1, **caractérisé en ce que** le polymère A présente un poids moléculaire pondéral moyen Mw ≥ 1000 et ≤ 10 000 g/mole.

3. Procédé selon la revendication 1 ou 2, **caractérisé en ce que** le polymère B présente un poids moléculaire pondéral moyen Mw ≥ 1000 et ≤ 10 000 g/mole.

4. Procédé selon l'une quelconque des revendications 1 à 3, **caractérisé en ce que** le polymère B est constitué d'acide acrylique et d'anhydride de l'acide maléique dans un rapport de quantités de 9:1 à 1:9.

5. Procédé selon l'une quelconque des revendications 1 à 4, **caractérisé en ce que** la dispersion aqueuse d'un produit polymérisé soluble dans l'eau a été préparée par polymérisation induite par voie radicalaire d'au moins un monomère éthyléniquement insaturé MON en présence d'au moins un polymère soluble dans l'eau X et d'au moins un polymère soluble dans l'eau Y, ledit au moins un polymère soluble dans l'eau X étant choisi parmi
(a1) les polymères greffés d'acétate de vinyle et/ou de propionate de vinyle sur du polyalkylèneglycol ou du polyalkylèneglycol substitué d'un ou des deux côtés par des groupes alkyle, carboxyle ou amino,
(a2) les copolymères de (méth) acrylates d'alkylpolyalkylèneglycol et d'acide (méth) acrylique,
(a3) les polyalkylèneglycols,
(a4) les polyalkylèneglycols substitués d'un ou des deux côtés par des groupes alkyle, carboxyle ou amino,
et ledit au moins un polymère soluble dans l'eau Y étant choisi parmi
(b1) les copolymères hydrolysés de vinylalkyléthers et d'anhydride de l'acide maléique sous forme de polyacide libre ou neutralisée, au moins partiellement, avec des hydroxydes de métal alcalin ou des bases d'ammonium,
(b2) l'amidon, modifié ou non modifié,
(b3) les copolymères synthétiques, pouvant être obtenus par copolymérisation de
(β1) un ou plusieurs monomères éthyléniquement monoinsaturés non ioniques,
(β2) un ou plusieurs monomères éthyléniquement monoinsaturés cationiques,
(β3) éventuellement un ou plusieurs monomères éthyléniquement monoinsaturés anioniques,
la proportion molaire de monomères éthyléniquement monoinsaturés cationiques (β2) copolymérisés dans (b3) étant supérieure à la proportion de monomères éthyléniquement monoinsaturés anioniques (ß3) copolymérisés.
